# EUROPÄISCHE PATENTSCHRIFT

(11) **EP 0 864 686 B1**
(45) Veröffentlichungstag und Bekanntmachung des Hinweises auf die Patenterteilung: **01.10.2003**
(21) Anmeldenummer: 98810122.6
(22) Anmeldetag: 16.02.1998
(51) Int. Cl.: D06N 7/00, B05C 19/06, B05B 15/04

(54) **Verfahren und Vorrichtung zum Beschichten eines bahnförmigen Flächengebildes**
Method and apparatus for coating a material web
Procédé et dispositif pour recouvrir des bandes de matériaux plats

(30) Priorität: 26.02.1997 CH 43997
(43) Veröffentlichungstag der Anmeldung: 16.09.1998
(73) Patentinhaber: SOLIPAT AG, CH-6300 Zug (CH)
(72) Erfinder: Strahm, Christian, 9552 Bronschhofen (CH); Gerbig, Thomas, 8280 Kreuzlingen (CH)
(74) Vertreter: Hepp, Dieter

(56) Entgegenhaltungen:
- EP-A- 0 657 572
- EP-A- 0 745 430
- DE-A- 2 231 723
- DE-A- 4 405 549

## Beschreibung

Die Erfindung betrifft ein Verfahren und eine Vorrichtung zum Beschichten eines kontinuierlich geförderten Flächengebildes mit den Merkmalen des Oberbegriffs der unabhängigen Patentansprüche.

In der Beschichtungstechnologie ist es bekannt, Fixiereinlagen mit dem sogenannten Doppelpunktverfahren herzustellen. Die Kombination von zwei bekannten Beschichtungsverfahren (Pastenpunkt- und Streubeschichtung) ermöglicht die Vereinigung der Eigenschaften von verschiedenen Typen Schmelzkleber in einem Punkt, der aus dem sogenannten Unterpunkt und aus einem Oberpunkt besteht. Ein meist thermoplastischer Werkstoff wird in einzelnen Punkten (Pastenabschnitten) auf das zu beschichtende Flächengebilde (typischerweise eine textile Warenbahn) aufgebracht. Anschliessend wird zur Bildung des Oberpunkts ein niedrig schmelzender Klebstoff aufgestreut. Der den Oberpunkt bildende niedrig schmelzende Klebstoff haftet an der feuchten, klebrigen Oberfläche der Unterpunkten. Auf der restlichen Oberfläche des Flächengebildes liegt er lose auf. In einem nächsten Verfahrensschritt kann der aufgestreute pulverförmige und niedrig schmelzende Klebstoff abgesaugt werden. Nur an den Unterpunkten bleibt der pulverförmige Klebstoff haften und bildet damit einen genau plazierten Oberpunkt.

In einem anschliessenden Verfahrensschritt wird die so beschichtete Warenbahn einem thermischen Behandlungsverfahren unterzogen und die aufgestreute Pulverschicht wird angeschmolzen und fixiert.

Bei diesem Doppelpunkt-Beschichtungsverfahren treten verschiedene Probleme auf. So ist es insbesondere schwierig, die pulverförmig aufgestreute Schicht in den Bereichen ausserhalb der Unterpunkte vollständig zu entfernen. Wenn zwischen den einzelnen Unterpunkten noch Pulver vorhanden ist, wird dieses in der anschliessenden Thermobehandlung ebenfalls auf dem Flächengebilde fixiert.

Bei bekannten Verfahren werden die Flächengebilde geklopft / geschlagen, um das Pulver zu lockern. Danach wird es mittels einer Saugeinrichtung von der Oberfläche des Flächengebildes entfernt. Dieses Verfahren ist aber mit dem Nachteil behaftet, dass durch die Beschleunigung beim Klopfen das Pulver in das Flächengebilde eindringt. Es lässt sich dann nur schwer und unvollständig aus ihr heraussaugen.

Es ist ausserdem bekannt, mit einem Luftstrahl durch die Textilbahn zu blasen und gleichzeitig die Partikel auf der Gegenseite abzusaugen. Damit die Textilbahn beim Blasen nicht flattert oder abhebt, muss sie aber von unten her durch Saugeinrichtungen gehalten werden. Dadurch wird ebenfalls ein Teil des Pulvers in die Bahn gesaugt und es setzt sich dort fest. Ausserdem ist dieses Verfahren nicht bei allen Flächengebilden anwendbar, weil die Wirkung von der Porosität des Materials des Flächengebildes abhängt. Dichtes Material lässt sich schlecht von unten her durchblasen.

Es ist eine Aufgabe der Erfindung, die Nachteile des Bekannten zu vermeiden, insbesondere ein Verfahren und eine Vorrichtung zum Beschichten eines Flächengebildes mit einer Doppelpunktschicht zu schaffen, die ein zuverlässiges Entfernen der aufgestreuten Pulverschicht erlauben. Das Verfahren und die Vorrichtung sollen ausserdem einfach ausführbar sein, so dass keine zusätzlichen Massnahmen zum Fixieren der Warenbahn notwendig sind.

Erfindungsgemäss werden diese Aufgaben mit einem Verfahren und einer Vorrichtung mit den Merkmalen des kennzeichnenden Teils der unabhängigen Patentansprüche gelöst.

In einem Verfahren zum Beschichten eines kontinuierlich geförderten bahnförmigen Flächengebildes wird in einem ersten Verfahrensschritt eine pastenförmige Kunststoffschicht in zueinander beabstandeten Abschnitten, vorzugsweise in punktförmigen Abschnitten, aufgetragen. In einem nachfolgenden Verfahrensschritt wird eine zweite Schicht eines pulverförmigen thermoplastischen Kunststoffs mit vorzugsweise tieferer Schmelztemperatur auf die erste, pastenförmige Schicht aufgestreut. Diese Zweipunktbeschichtung wird anschliessend einer Thermobehandlung unterzogen.

Vor der Thermobehandlung wird das zwischen den Abschnitten der ersten Kunststoffschicht aufgetragene Pulver durch einen schräg gegen die Oberfläche des Flächengebildes gerichteten Luftstrahl aufgewirbelt. Gleichzeitig werden die aufgewirbelten Pulverpartikel mittels einer Saugeinrichtung gezielt direkt über der Warenbahn abgesaugt. Der schräg gegen die Oberfläche des Flächengebildes gerichteter Luftstrahl erübrigt Festhaltevorrichtungen für die Warenbahn vor der Absaugung. Die Angriffsrichtung des Luftstrahls und die Turbulenzen im Bereich der Oberfläche der Warenbahn führen zu einer optimalen Loslösung der Pulverpartikel von der Oberfläche des Flächengebildes.

In einem besonders vorteilhaften Ausführungsbeispiel wird der Luftstrahl unter einem Winkel von 80° bis 30° zur Oberfläche des Flächengebildes gegen diese Oberfläche gerichtet. Der Winkel beträgt vorzugweise 75° bis 60°.

In einem weiteren vorteilhaften Ausführungsbeispiel wird der Luftstrahl entgegen der Laufrichtung des Flächengebildes gerichtet.

In einem weiteren bevorzugten Ausführungsbeispiel wird die Warenbahn im Bereich des auftretenden Luftstrahls über eine Prallplatte geführt. Dies ist insbesondere bei weniger dichten Flächengebilden vorteilhaft. Die Prallplatte dient einerseits als Auflagefläche für das Flächengebilde und erlaubt ein ruhiges Transportieren des Materials. Andererseits bildet sich im Start- und Umlenkbereich des Luftstrahls auch bei wenig dichtem Material Turbulenzen, was das Lösen des thermoplastischen Pulvers aus der Warenbahn erleichtert.

Es hat sich ausserdem gezeigt, dass es vorteilhaft sein kann, das aufgestreute Pulver vorteilhaft einer Ionisationsbehandlung zu unterziehen. Wenn der Luftstrahl vor dem Auftreffen auf die Oberfläche des Flächengebildes durch ein starkes elektrisches Wechselfeld geführt wird, kann die statische Ladung der Pulverpartikel stark reduziert werden. Dabei spielen einerseits der direkte Einfluss des Wechselfeldes auf die Pulverpartikel und andererseits der ionisierte Luftstrahl eine Rolle. Die Anordnung eines Wechselfeldes hilft zuverlässig, eine statische Aufladung der Pulverpartikel aufzuheben. Die Kombination von Ansaugen und Anblasen führt ausserdem zu einem vorteilhaften Niederhalteeffekt. Die Kräfte der beiden Luftströme auf die Warenbahn gleichen sich aus.

Die erfindungsgemässe Vorrichtung besteht im wesentlichen aus einer Beschichtungsanordnung zum Aufbringen der ersten pastenförmigen Schicht und aus einer Streuanordnung zum Aufstreuen der zweiten pulverförmigen Schicht.

Die Vorrichtung ist ausserdem mit einer Transportanordnung zum Fördern des Flächengebildes von der Beschichtungsanordnung zur Streuanordnung und zu nachgeschalteten Behandlungsanordnungen versehen.

Zwischen der Streuanordnung zum Auftragen des Pulvers und der nachgeschalteten Behandlungsanordnung ist eine Einrichtung zum Entfernen des zwischen den Abschnitten der ersten Schicht aufgetragenen Pulvers vorgesehen. Die Einrichtung besteht aus einer Blaseinrichtung zum Blasen eines schräg gegen die Oberfläche des Flächengebildes gerichteten Luftstrahls und einer Saugeinrichtung zum Absaugen des durch den Luftstrahl aufgewirbelten Pulvers.

Vorteilhaft ist die Blaseinrichtung so angeordnet, dass der Blasstrahl in einem Winkel von 80° bis 30°, vorzugsweise von 75° bis 60° auf die Oberfläche des Flächengebildes auftrifft.

In einem weiteren bevorzugten Ausführungsbeispiel ist die erfindungsgemässe Vorrichtung ausserdem mit einer Prallplatte versehen, über welche das Flächengebilde im Bereich der Blasund Saugeinrichtung führbar ist.

Die Vorrichtung ist weiter bevorzugt mit einer Ionisationsanordnung zum Ionisieren der Blasluft und zum Erzeugen eines elektrischen Wechselfeldes versehen.

Die Erfindung wird im folgenden in einem Ausführungsbeispiel und anhand der Zeichnungen näher erläutert. Es zeigen:
- Figur 1: eine schematische Darstellung einer erfindungsgemässen Vorrichtung,
- Figur 2: eine vergrösserte Darstellung der Blas- und Saugeinrichtung,
- Figur 3: eine schematische Darstellung einer Blas- und Saugeinrichtung, und
- Figuren 4a und 4b: eine schematische Darstellung von Beschichtungs-Punkten vor und nach dem Absaugen des Pulvers.

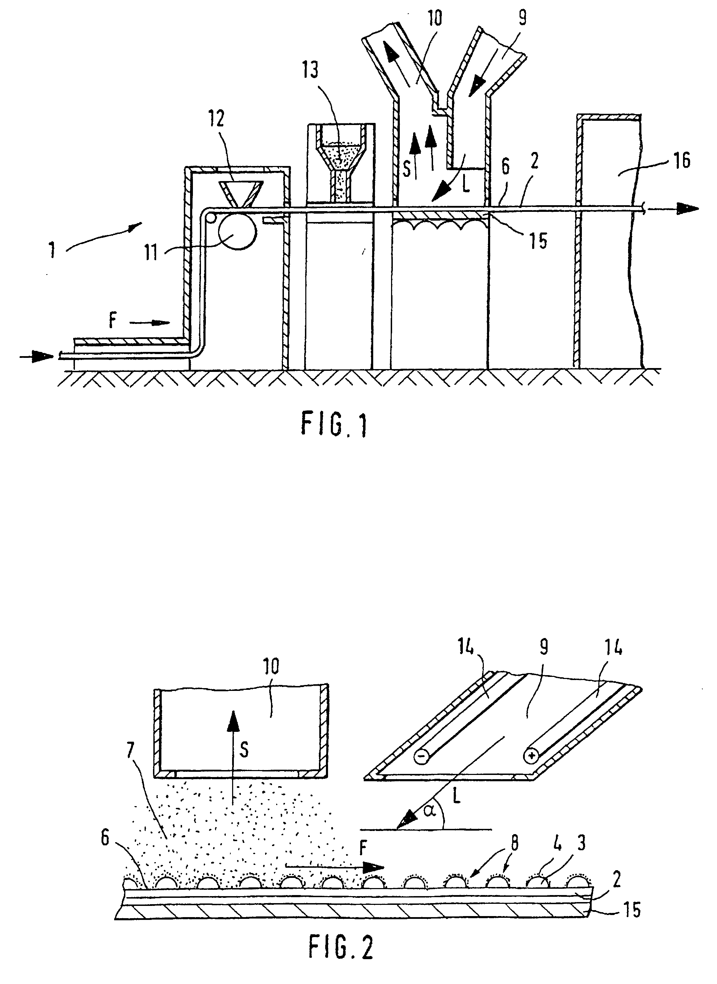

Figur 1 zeigt schematisch eine Seitenansicht einer erfindungsgemässen Vorrichtung 1. Die Vorrichtung besteht aus einer oder mehreren einander nachgeschalteten Komponenten. In einer ersten Beschichtungsanordnung 12 wird eine pastenförmige Kunststoffschicht in Abschnitten oder Punkten 8 (Fig. 2) auf ein meist feuchtes von vorangehenden Behandlungsschritten gefördertes Flächengebilde 2 aufgetragen. Mit einer der Beschichtungsanordnung 12 nachgeschalteten Streuanordnung 13 wird anschliessend flächig eine Schicht eines pulverförmigen thermoplastischen Kunststoffs auf das Flächengebilde 2 aufgestreut.

Am Ende des Behandlungsvorgangs wird das Flächengebilde 2 einer Behandlungsanordnung 16 zugeführt, die nur schematisch dargestellt ist. Das Flächengebilde 2 wird in der Behandlungsanordnung 16 getrocknet und auf Schmelztemperatur des Beschichtungsmaterials erwärmt. Zwischen der Streuanordnung 14 und der Behandlungsanordnung 16 ist eine Blaseinrichtung 9 und eine Saugeinrichtung 10 angeordnet. Die Saugeinrichtung ist unmittelbar über der Warenbahn angeordnet.

Durch die Blaseinrichtung 9 kann ein Luftstrahl L gegen die Oberfläche 6 des Flächengebildes 2 gerichtet werden. Dadurch wird das zwischen den Abschnitten der ersten Schicht aufgetragene Pulver aufgewirbelt. Die Saugeinrichtung 10 saugt das abgewirbelte Pulver in einem Saugstrahl S ab. In Figur 1 ist ausserdem eine Prallplatte 15 gezeigt, über welche das Flächengebilde 2 geführt wird.

Figur 2 zeigt eine detaillierte Darstellung der Blaseinrichtung 9, der Saugeinrichtung 10 und des Flächengebildes 2. Die Beschichtung des Flächengebildes 2 erfolgt in einzelnen Punkten 8. Jeder Punkt 8 besteht aus einer ersten Schicht 3, aus einem pastenförmigen Kunststoff und einer zweiten als Pulver aufgestreuten Schicht 4. Das gleichmässig mit Pulver bestreute Flächengebilde 2 wird unter der Blaseinrichtung 9 und der Saugeinrichtung 10 vorbeigeführt. Die Blaseinrichtung 9 bläst einen Luftstrahl L unter einem Winkel α gegen die Oberfläche 6 des Flächengebildes 2. Der Luftstrahl L ist gegen die Förderrichtung F des Flächengebildes 2 gerichtet. Zwei Elektroden 14 sind an eine nicht dargestellte Hochspannungs-Quelle angeschlossen, die sie mit Wechselspannung versorgt. Durch das Wechselfeld werden statische Aufladungen des Pulvers 7 abgebaut, was die Verwirbelung erleichtert. Das durch den Luftstrahl L aufgewirbelte Pulver 7 wird von der Saugeinrichtung 10 in einem Saugstrahl S abgesaugt. Nach Passieren der Blaseinrichtung 9 und der Saugeinrichtung 10 haftet das Pulver 7 nur noch auf der klebrigen Oberfläche der pastenförmigen Punkte 8. Die Abschnitte zwischen den einzelnen Punkten 8 sind frei von Pulver. Das Flächengebilde 2 wird, wie in Figur 2 gezeigt, ausserdem über eine Prallplatte 15 geführt, die einerseits eine präzise Führung des Flächengebildes 2 erlaubt und die andererseits bei durchlässigen Flächengebilden den Stau- und Verwirbelungsbereich für den Luftstrahl L definiert.

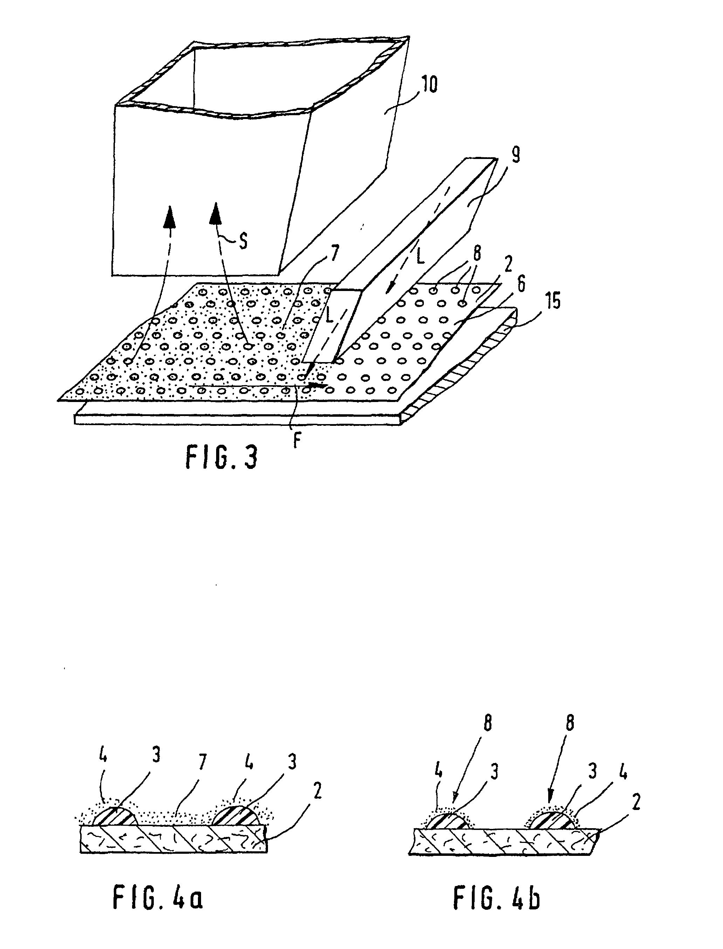

Figur 3 zeigt schematisch eine dreidimensionale Darstellung des Flächengebildes 2 im Bereich der Blaseinrichtung 9 und der Saugeinrichtung 10. Der Luftstrom L der Blaseinrichtung 9 wirbelt das Pulver 7 von der Oberfläche 6 des Flächengebildes 2 auf. Der aufgewirbelte Pulverstaub 7 wird von der Saugeinrichtung in einem Absaugstrahl S abgesaugt. Figur 3 zeigt ebenfalls die Prallplatte 15, über welche das Flächengebilde 2 geführt wird. Das flächig aufgestreute Pulver zur Bildung der in Figur 2 dargestellten zweiten Schicht 4 bleibt nur in den Abschnitten haften, wo vorgehend eine erste Schicht eines pastenförmigen Kunststoffs angebracht wird. Auf diese Weise ist eine Pulver-Beschichtung in einzelnen Punkten 8 möglich.

Figur 4a zeigt einen Ausschnitt aus dem Flächengebilde 2 kurz nach dem Aufstreuen des Pulvers 7. Auf dem Flächengebilde 2 sind einzelne Punkte einer ersten Schicht 3 aus einem pastenförmigen Kunststoff aufgetragen. Über die erste Schicht 3 ist flächig eine zweite Schicht 4 eines Pulvers 7 gestreut.

Figur 4b zeigt denselben Ausschnitt aus dem Flächengebilde 2 nach dem Passieren der in der vorangehenden Figur gezeigten Blaseinrichtung 9 und der Absaugeinrichtung 10. Das Pulver 7 wurde in den Abschnitten zwischen den einzelnen Abschnitten der ersten Schicht 3 abgesaugt. Übrig bleiben einzelne Punkte 8, welche aus einer ersten Schicht 3 und einer zweiten Schicht 4 bestehen. Das so beschichtete Flächengebilde 2 kann in einer nachgeschalteten Behandlungsanordnung (siehe Figur 1) einer thermischen Behandlung unterzogen werden, bei welcher die immer noch pulverförmige Schicht 4 verschmolzen werden kann.

## Patentansprüche

1. Verfahren zum Beschichten eines kontinuierlich geförderten bahnförmigen Flächengebildes (2) mit einer ersten, in Abschnitten aufgetragenen pastenförmigen Kunststoffschicht (3) und einer zweiten, als Pulver (7) flächig aufgestreuten Schicht (4) eines thermoplastischen Kunststoffs, und zur nachfolgenden Thermobehandlung des beschichteten Flächengebildes (2), **dadurch gekennzeichnet, dass** das zwischen den Abschnitten der aufgetragenen ersten Schicht (3) aufgetragene Pulver (7) vor der Thermobehandlung durch einen schräg gegen die Oberfläche (6) des Flächengebildes (2) gerichteten Luftstrahl (L) aufgewirbelt und gleichzeitig in einem Saugstrahl (S) direkt über der Warenbahn abgesaugt wird.

2. Verfahren nach Anspruch 1, **dadurch gekennzeichnet, dass** der Luftstrahl (L) in einem Winkel (a) von 80° bis 30°, vorzugsweise von 75° bis 60° gegen die Oberfläche (6) gerichtet wird.

3. Verfahren nach einem Ansprüche 1 oder 2, **dadurch gekennzeichnet, dass** der Luftstrahl (L) gegen die Laufrichtung (F) des Flächengebildes (2) gerichtet wird.

4. Verfahren nach einem der Ansprüche 1 bis 3, **dadurch gekennzeichnet, dass** das Pulver (7) und/oder der Luftstrahl (L) einer Ionisationsbehandlung unterzogen werden.

5. Verfahren nach einem der Ansprüche 1 bis 4, **dadurch gekennzeichnet, dass** das Flächengebilde im Bereich des Luftstrahls (L) über eine Prallplatte (15) geführt wird.

6. Vorrichtung (1) zum Beschichten eines kontinuierlich geförderten bahnförmigen Flächengebildes (2) mit einer ersten, in Abschnitten aufgetragenen pastenförmigen Kunststoffschicht (3) und einer zweiten, als Pulver (7) flächig aufgestreuten Schicht (4) eines thermoplastischen Kunststoffs,
wobei die Vorrichtung eine Beschichtungsanordnung (12) zum Auftragen der ersten Schicht (3) und eine Streuanordnung (13) zum Aufstreuen der zweiten Schicht (4) auf die Oberfläche (6) des Flächengebildes (2) aufweist,
und wobei die Vorrichtung (1) eine Transporteinrichtung (11) zum Fördern des Flächengebildes (2) von der Beschichtungsanordnung (12) zu der Streuanordnung (13) aufweist,
**dadurch gekennzeichnet, dass** zwischen der Streuanordnung (13) und einer nachgeschalteten Behandlungsanordnung (16) zum thermischen Behandeln des beschichteten Flächengebildes (2) oberhalb der Oberfläche (6) des Flächengebildes (2) eine Blaseinrichtung (9) zum Aufwirbeln des Pulvers (7) mittels einem Luftstrahl (L) sowie eine Absaugeinrichtung (10) zum Absaugen des aufgewirbelten Pulvers (7) vorgesehen sind.

7. Vorrichtung nach Anspruch 6, **dadurch gekennzeichnet, dass** die Blaseinrichtung (9) derart angeordnet ist, dass der Luftstrahl (L) in einem Winkel (a) von 80° bis 30°, vorzugsweise 75° bis 60° gegen die Oberfläche (6) des Flächengebildes (2) gerichtet ist.

8. Vorrichtung nach einem der Ansprüche 6 oder 7, **dadurch gekennzeichnet, dass** die Vorrichtung (1) im Bereich der Blaseinrichtung (9) und der Saugeinrichtung (10) mit einer Prallplatte (15) versehen ist, über welche das Flächengebilde (2) führbar ist.

9. Vorrichtung nach einem der Ansprüche 6 bis 8, **dadurch gekennzeichnet, dass** die Vorrichtung (1) mit einer Ionisationsanordnung (14) zum Ionisieren des Luftstrahls (L) und zum Erzeugen eines elektrischen Wechselfeldes versehen ist.

## Claims

1. A method of coating a continuously conveyed flat article (2) in web form with a first plastic layer (2) in paste form which is applied in portions and a second layer (4) of a thermoplastic material, which is applied as powder by sprinkling over the surface, and subsequently effecting heat treatment of the coated flat article (2), **characterised in that** the powder (7) applied between the portions of the first applied layer (3), prior to the heat treatment, is swirled up by an air jet (L) directed inclinedly against the surface (6) of the flat article (7) and at the same time is sucked away directly over the web of material in a suction jet (S).

2. A method according to claim 1 **characterised in that** the air jet (L) is directed at an angle (α) of 80° to 30°, preferably 75° to 60°, against the surface (6).

3. A method according to one of claims 1 and 2 **characterised in that** the air jet (L) is directed in opposite relationship to the direction of movement (F) of the flat article (2).

4. A method according to one of claims 1 to 3 **characterised in that** the powder (7) and/or the air jet (L) are subjected to an ionisation treatment.

5. A method according to one of claims 1 to 4 **characterised in that** in the region of the air jet (L) the flat article is passed over an impingement plate (15).

6. An apparatus for coating a continuously conveyed flat article (2) in web form with a first plastic layer (2) in paste form which is applied in portions and a second layer (4) of a thermoplastic material, which is applied as powder by sprinkling over the surface,
wherein the apparatus has a coating arrangement (12) for applying the first layer (3) and a sprinkling arrangement (13) for applying the second layer (4) by sprinkling on to the surface (6) of the flat article (2),
and wherein the apparatus (1) has a transport device (11) for conveying the flat article (2) from the coating arrangement (12) to the sprinkling arrangement (13),
**characterised in that** provided between the sprinkling arrangement (13) and a downstream-disposed treatment arrangement (16) for the heat treatment of the coated flat article (2) above the surface (6) of the flat article (2) are a blowing device (9) for swirling up the powder (7) by means of an air jet (L) and a suction removal device (10) for sucking away the swirled-up powder (7).

7. Apparatus according to claim 6 **characterised in that** the blowing device (9) is arranged in such a way that the air jet (L) is directed at an angle (α) of 80° to 30°, preferably 75° to 60°, against the surface (6) of the flat article (2).

8. Apparatus according to one of claims 6 and 7 **characterised in that** in the region of the blowing device (9) and the suction device (10) the apparatus (1) is provided with an impingement plate (15) over which the flat article (2) can be passed.

9. Apparatus according to one of claims 6 to 8 **characterised in that** the apparatus (1) is provided with an ionisation arrangement (14) for ionising the air jet (L) and for producing an alternating electrical field.

## Revendications

1. Procédé pour revêtir un produit plat en forme de bande (2), entraîné en continu, d'une première couche de matière plastique pâteuse (3) appliquée par tronçons, et d'une seconde couche de matière thermoplastique (4) répandue en nappe sous forme de poudre (7), et pour soumettre ensuite le produit plat (2) revêtu à un traitement thermique, **caractérisé en ce que** la poudre (7) appliquée entre les tronçons de la première couche appliquée (3) est soumise, avant le traitement thermique, à un tourbillonnement grâce à un jet d'air (L) dirigé en biais vers la surface (6) du produit plat (2) et est en même temps aspirée dans un jet d'aspiration (S) directement au-dessus du produit en bande.

2. Procédé selon la revendication 1, **caractérisé en ce que** le jet d'air (L) est dirigé vers la surface (6) suivant un angle (α) de 80° à 30°, de préférence de 75° à 60°.

3. Procédé selon la revendication 1 ou 2, **caractérisé en ce que** le jet d'air (L) est opposé au sens de défilement (F) du produit plat (2).

4. Procédé selon l'une des revendications 1 à 3, **caractérisé en ce que** la poudre (7) et/ou le jet d'air (L) sont soumis à un traitement ionisant.

5. Procédé selon l'une des revendications 1 à 3, **caractérisé en ce que** le produit plat, dans la zone du jet d'air (L), est guidé sur une chicane (15).

6. Dispositif (1) pour revêtir un produit plat en forme de bande (2), entraîné en continu, d'une première couche de matière plastique pâteuse (3) appliquée par tronçons, et d'une seconde couche de matière thermoplastique (4) appliquée en nappe sous forme de poudre (7),
le dispositif comportant un dispositif d'enduction (12) pour appliquer la première couche (3), et un dispositif de dispersion (13) pour répandre la seconde couche (4) sur la surface (6) du produit plat (2),
le dispositif (1) comportant un dispositif de transport (11) pour amener le produit plat (2) du dispositif d'enduction (12) jusqu'au dispositif de dispersion (13),
**caractérisé en ce qu'**il est prévu au-dessus de la surface (6) du produit plat (2), entre le dispositif de dispersion (13) et un dispositif de traitement (16) monté en aval pour le traitement thermique du produit plat (2) revêtu, un dispositif de projection (9) pour faire tourbillonner la poudre (7) à l'aide d'un jet d'air (L), ainsi qu'un dispositif d'aspiration (10) pour aspirer la poudre (7) soulevée en tourbillons.

7. Dispositif selon la revendication 6, **caractérisé en ce que** le dispositif de projection (9) est disposé de telle sorte que le jet d'air (L) soit dirigé vers la surface (6) du produit plat (2) suivant un angle (α) de 80° à 30°, de préférence de 75° à 60°.

8. Dispositif selon la revendication 6 ou 7, **caractérisé en ce que** le dispositif (1) est pourvu, dans la zone du dispositif de projection (9) et du dispositif d'aspiration (10), d'une chicane (15) sur laquelle le produit plat (2) peut être guidé.

9. Dispositif selon l'une des revendications 6 à 8, **caractérisé en ce que** le dispositif (1) est pourvu d'un dispositif d'ionisation (14) pour ioniser le jet d'air (L) et pour produire un champ électrique alternatif.
